# EUROPÄISCHE PATENTSCHRIFT

(11) **EP 1 088 697 B1**
(45) Veröffentlichungstag und Bekanntmachung des Hinweises auf die Patenterteilung: **27.06.2007**
(21) Anmeldenummer: 00116908.5
(22) Anmeldetag: 05.08.2000
(51) Int. Cl.: B60N 3/14, F23Q 7/00

(54) **Elektrische Steckverbindung**
Electric plug-in connector
Connecteur électrique à fiches

(30) Priorität: 29.09.1999 DE 19946627
(43) Veröffentlichungstag der Anmeldung: 04.04.2001
(73) Patentinhaber: Inter Control Hermann Köhler Elektrik GmbH & Co. KG, 90411 Nürnberg (DE)
(72) Erfinder: Wolf, Roland, 91217 Hersbruck (DE)
(74) Vertreter: Hafner, Dieter

(56) Entgegenhaltungen:
- DE-A- 2 652 857
- DE-A- 3 206 904
- DE-C- 3 932 604
- FR-A- 1 436 102

## Beschreibung

Die Erfindung betrifft eine elektrische Steckverbindung, insbesondere eine Steckdose oder eine Zigarrenanzündeeinrichtung für Kraftfahrzeuge oder dergleichen, mit den weiteren Merkmalen des Oberbegriffes des Patentanspruches 1.

Eine z. B. aus DE 3932602C1 bekannte elektrische Steckverbindung der vorbezeichneten Art umfaßt ein hülsenartiges Führungsteil zur axialverschiebbaren Aufnahme eines Zigarrenanzünders oder eines Anschlußsteckers eines elektrischen Verbrauchers. Im Hülsenbodenbereich ist auf einem Isolierträger ein erster Festkontakt zur Beaufschlagung durch einen Gegenkontakt angeordnet. Das insbesondere elektrisch leitfähige Führungsteil bildet einen zweiten Festkontakt, der weitere Gegenkontakte beaufschlagt. An der bekannten elektrischen Steckverbindung ist darüber hinaus ein thermischer Überlastschutz vorgesehen.

Eine weitere bekannte elektrische Steckvorrichtung mit den Merkmalen des Oberbegriffes des Anspruches 1 in Form eines elektrischen Zigarrenanzünders mit einem als Schnappscheibe ausgebildeten Bimetallschalter ist aus DE 26 52 857 A bekannt. Schnappscheibe und Einlegeblech bilden dabei gesonderte Bauteile, die gesondert zu montieren sind.

Aus DE 32 06 904 A ist ein elektrischer Zigarrenanzünder bekannt, der einen Bimetallschalter in Form einer Schnappscheibe hat. Schnappscheibe und Kontaktteil sind an einem Justiering angebracht, der in ein in der Steckdose befindliches Rohrstück eingepreßt wird.

Aus FR 1 436 102 A ist ebenfalls ein Zigarrenanzünder bekannt, bei welchem eine elektrische Trennung des Heizelementes durch ein als Schnappscheibe ausgebildetes Bimetallelement vollzogen wird.

Der Erfindung liegt die Aufgabe zugrunde, eine elektrische Steckverbindung der vorbezeichneten Art mit den Merkmalen des Anspruches 1 derart auszubilden, daß sie für die thermische Schutzfunktion nur wenige Teile benötigt, die auf einfache Weise mit herkömmlichen Teilen zusammengebaut werden können, dabei eine hohe Funktionalität und Robustheit der Vorrichtung gegen manipulierenden Eingriff sichergestellt ist und die Schutzvorrichtung bei einer Stromüberlastung von mehr als z. B. 15 A schnell und sicher anspricht.

Diese Aufgabe wird durch die kennzeichnenden Merkmale des Anspruches 1 gelöst. Vorteilhafte Weiterbildungen ergeben sich aus den Unteransprüchen 2 - 13, Anspruch 14 betrifft einen Verfahrensanspruch zur Herstellung einer elektrischen Steckverbindung.

Gemäß der Erfindung ist nun vorgesehen, daß der thermische Überlastschutz ein sich parallel und mit Abstand zum Isolierträger im inneren des Hülsenbodenbereichs erstreckendes Einlegeblech aufweist, an dessen Mittelbereich der U-Mittelbereich einer etwa U-förmigen Bimetallfeder befestigt ist, und an dessen Unterseite elektrisch leitend außerzentrisch eine Bimetallschaltfeder befestigt ist, die im Ruhezustand den ersten Festkontakt oder einen mit diesem verbundenen Seitenkontakt beaufschlagt. Der Durchmesser dieser Funktionseinheit ist dabei geringer als der Innendurchmesser des hülsenartigen Führungselementes, wodurch diese axial von der Öffnungsseite in die Führungshülse einführbar ist. Im Endmontagezustand ist die Funktionseinheit durch eine Schnapp-/Rastverbindung mit dem Isolierträger mit einem derartigen Abstand verbunden, daß für die Bimetallschaltfeder im Erregungszustand ein Öffnungs-Schwenkbereich verbleibt.

Durch die Erfindung wird in vorteilhafterweise eine zusammenhängende Funktionsbaugruppe geschaffen, die vormontiert und insbesondere hinsichtlich ihrer elektrischen und thermischen Schutzeigenschaften auch vorgeprüft werden kann. Die vormontierte Funktionsbaugruppe, bestehend aus Einlegeblech, Bimetallschaltfeder und einer Bimetallfeder, die einen Zigarrenanzünder sich während der Aufheizphase fixiert und thermisch nach der Aufheizphase freigibt, kann nur mit einer einzigen Bewegung auf die vormontierte Basisbaugruppe, bestehend aus dem Isolierträger und dem Mittenkontakt bzw. einem Seitenkontakt aufgeschnappt werden Gegenüber bekannten Vorrichtungen spricht die erfindungsgemäße elektrische Steckvorrichtung schneller an, sie ist einfach zusammenzubauen, sie benötigt wenig Raum und sie kann hinsichtlich ihrer thermischen Eigenschaften vorgeprüft werden.

Um die gegenseitige Montage der beiden Baugruppen weiter zu vereinfachen, ist der Isolierträger randseitig mit über den Bodenbereich axial hinausstehenden Lagebegrenzungsvorsprüngen versehen, die gleichzeitig den Abstand des Einlegebleches vom Bodenbereich des Isolierträgers definieren. Im Endmontagezustand greift das Einlegeblech mit L-förmigen Randaufbiegungen über die Lagebegrenzungsvorsprünge, wodurch ein stabiler mechanischer Halt der beiden aneinander durch eine Schnapp-/Rastverbindungverbindung fixierten Teile erzielt wird. Die L-Schenkel der L-förmigen Randaufbiegungen liegen dabei auf den Lagebegrenzungsvorsprüngen auf.

Die Ansprüche 4 - 6 betreffen die Ausbildung der besonders vorteilhaften Schnapp-/Rastverbindung durch die eine manipulationssichere und dauerhafte Vierpunktbefestigung der vormontierten Funktionsbaugruppe auf der Basisbaugruppe sichergestellt wird.

Die Bimetallschaltfeder ist außerzentrisch mit der Unterseite des Einlegebleches verbunden, wodurch ein relativ langer Schalthub sowie eine relativ große Bimetallschaltfederlänge ermöglicht werden. Der Schalthub wird durch die Anordnung des Seitenkontaktes in einer Vertiefung des Isolierträgers weiter vergrößert, außerdem wird durch die Vertiefung des Isolierträgers und die Einlage des Seitenkontaktes eine Vorfixierung für den Niet-Montagevorgang erzielt.

Durch die tellerartige Aufwölbung des Einlegebleches im Zentralbereich wird eine definierte Abstützung und Lagerung der Bimetallfeder auf dem Einlegeblech gewährleistet.

Mit dem Verfahrensanspruch 14 werden die einzelnen Herstellungs- und Montageschritte für die elektrische Steckverbindung unter Schutz gestellt.

Die Erfindung ist anhand eines Ausführungsbeispieles in den Zeichnungsfiguren näher erläutert.

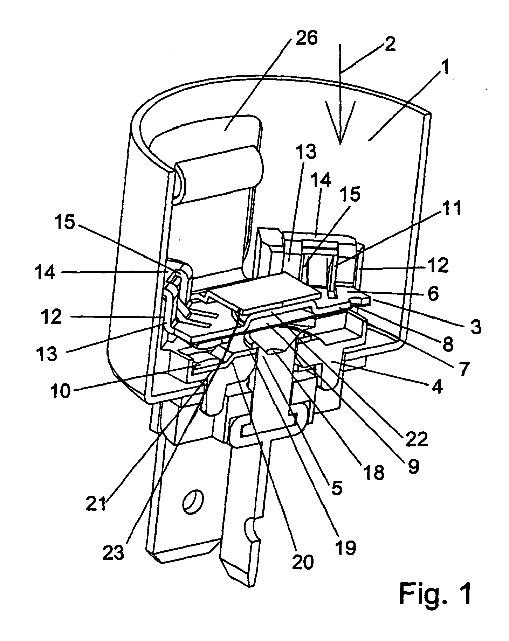

Diese zeigen
- Fig. 1: eine perspektivische, mittig geschnittene Ansicht der miteinander verbundenen Funktionsbaugruppe und Basisbaugruppe.

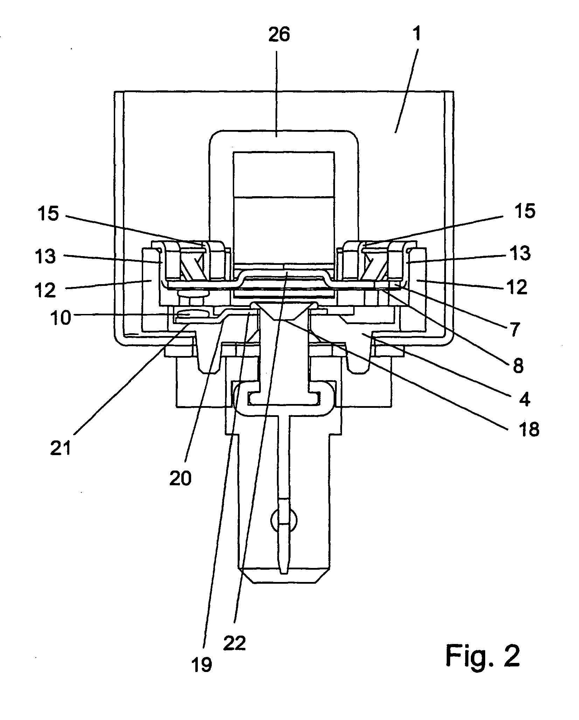

- Fig. 2: einen Schnitt durch die beiden Baugruppen sowie

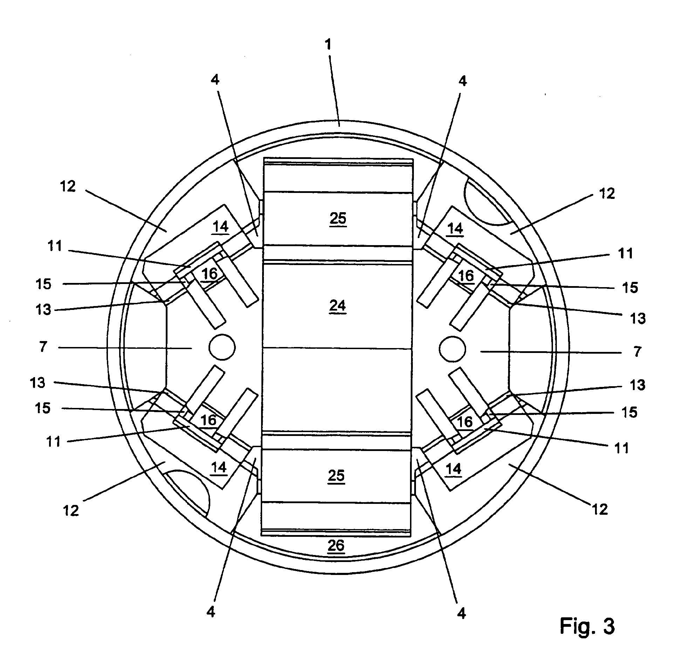

- Fig. 3: eine Draufsicht in Einsteckrichtung auf die beiden miteinander verbundenen Baugruppen der elektrischen Steckverbindung.

Die elektrische Steckverbindung umfaßt ein hülsenartiges Führungsteil 1, in welches in Axialrichtung 2 entweder ein Zigarrenanzünder oder ein Anschlußstecker eines elektrischen Verbrauchers eingeschoben werden kann. Im Bodenbereich 3 des Führungsteils 1 ist auf einem Isolierträger 4 ein erster Festkontakt 5 angeordnet, das elektrisch leitfähige Führungsteil 1 bildet einen zweiten Festkontakt 5, der mit Gegenkontakten oder Gehäuseteilen des Zigarrenanzünders oder Anschlußsteckers zusammenwirkt. Außerdem ist im Hülsenbodenbereich 3 ein thermischer Überlastschutz 6 vorgesehen.

Der thermische Überlastschutz 6 weist ein sich parallel und mit Abstand zum Isolierträger 4 im Bodenbereich 3 erstreckendes Einlegeblech 7 auf, an dessen Unterseite 8 elektrisch leitend eine Bimetallschaltfeder 9 befestigt ist, die im Ruhezustand einen mit dem ersten Festkontakt 5 verbundenen Seitenkontakt 10 beaufschlagt. In den Zeichnungsfiguren 1 und 2 ist die Bimetallschaltfeder 9 im sogenannten Erregungszustand dargestellt, in welchem die Kontaktstrecke zwischen Bewegungskontakt und Seitenkontakt 10 geöffnet ist. In dem nicht dargestellten Ruhezustand ist die Bimetallschaltfeder 9 in den Zeichnungsfiguren 1 und 2 etwas nach unten abgebogen, so daß die beiden sich gegenüberliegenden Kontakte aufeinander zu liegen kommen.

Der Durchmesser des Einlegebleches 7 ist geringer als der Innendurchmesser des hülsenartigen Führungsteils 1, so daß das Einlegeblech 7 in Axialrichtung 2 von der Öffnungsseite her in das Führungsteil 1 eingeschoben werden kann. Im dargestellten Endmontagezustand ist das Einlegeblech 7 durch eine mehrfache Schnapp-/Rastverbindung 11 mit dem Isolierträger 4 mit einem derartigen Abstand verbunden, daß für die Bimetallschaltfeder 9 im Erregungszustand ein Öffnungsschwenkbereich verbleibt.

Der Isolierträger 4 ist randseitig mit über den Bodenbereich 3 axial hinausstehenden Lagebegrenzungsvorsprüngen 12 versehen, das Einlegeblech 7 hat korrespondierende L-förmige Randaufbiegungen 13, deren L-Schenkel 14 im Endmontagezustand auf den Oberseiten der Lagebegrenzungsvorsprünge 12 aufliegen und dadurch den axialen Abstand des Einlegebleches 7 vom Isolierträger 4 definieren.

Die L-förmigen Randaufbiegungen 13 sind mit Ausnehmungen 15 versehen, in welchen federnde Rastnasen 16 freigeschnitten sind, die in Rastöffnungen des Isolierträgers 4 einrasten. Die Ausnehmungen 15 der L-förmigen Randaufbiegungen 13 durchgreifen sowohl den Flächenbereich des Einlegebleches 7 als auch beide L-Schenkel 14.

Der Festkontakt 5 im Zentrum des Isolierträgers 4 wird durch ein Befestigungsniet gebildet, das den Boden des Isolierträgers 4 durchgreift und in einen Flachstecker 18 übergeht. Das Niet bzw. der Nietkopf übergreift ein Trägerelement 19 des Seitenkontaktes 10, das mit einer Abbiegung 20 versehen ist, wodurch der Seitenkontakt 10 in einer Vertiefung 21 zu liegen kommt.

Der Zentralbereich des Einlegebleches 7 ist mit einer tellerartigen Aufwölbung 22 versehen, auf der der U-Mittelbereich 23 einer etwa U-förmig gebogenen Bimetallfeder 24 befestigt ist, die bei Erwärmung ihre beiden U-Schenkel 25 öffnet und dadurch einen eingedrückten Zigarrenanzünder in eine Entnahmestellung freigibt. Die U-Schenkel 25 der Bimetallfeder 24 erstrecken sich zwischen den Lagebegrenzungsvorsprüngen 12 des Isolierträgers 4 und durchgreifen bei Erwärmung Seitenausnehmungen 26 des hülsenartigen Führungsteils 1.

### BEZUGSZEICHEN

- 1: Führungsteil
- 2: Axialrichtung
- 3: Bodenberich
- 4: Isolierträger
- 5: Festkontakt
- 6: Überlastschutz
- 7: Einlegeblech
- 8: Unterseite
- 9: Bimetallschaltfeder
- 10: Seitenkontakt
- 11: Schnapp-/Rastverbindung
- 12: Lagebegrenzungsvorsprung
- 13: L-Randaufbiegung
- 14: L-Schenkel
- 15: Ausnehmungen von 13
- 16: Rastnasen
- 17: Rastöffnungen
- 18: Flachstecker
- 19: Trägerelement
- 20: Abbiegung
- 21: Vertiefung
- 22: Aufwölbung
- 23: U-Mittelbereich
- 24: Bimetallfeder
- 25: U-Schenkel
- 26: Ausnehmungen von 1

## Patentansprüche

1. Elektrische Steckverbindung, insbesondere Steckdose oder Zigarrenanzündeeinrichtung in Kraftfahrzeugen oder dergleichen, umfassend ein hülsenartiges Führungsteil (1) zur axial verschiebbaren Aufnahme eines Zigarrenanzünders oder eines Anschlußsteckers eines elektrischen Verbrauchers, wobei im Bodenbereich des Führungsteils (1) auf einem Isolierträger (4) ein erster Festkontakt (5) angeordnet ist und das zumindest abschnittsweise elektrisch leitfähige Führungsteil (1) einen zweiten Festkontakt bildet, der weitere Gegenkontakte beaufschlagt, sowie ein thermischer und elektrischer Überlastschutz (6) vorgesehen ist, der ein sich parallel und mit Abstand zum Isolierträger (4) im Bodenbereich (3) erstreckendes Einlegeblech (7) aufweist, unter dem ein Bimetallelement angeordnet ist,
**gekennzeichnet durch folgende Merkmale:**
a) an der Unterseite (8) des Einlegebleches (7) ist als Bimetallelement elektrisch leitend außerzentrisch eine Bimetallschaltfeder (9) und an dem Mittelbereich des Einlegeblechs der U-Mittelbereich (23) einer etwa u-förmigen Bimetallfeder (24) derart befestigt, daß das Einlegeblech (7), die daran befestigte Bimetallschaltfeder (9) sowie die Bimetallfeder (24) eine zusammenhängend montierbare und hinsichtlich ihres Schaltverhaltens vorprüfbare Funktionseinheit bilden, wobei U-Schenkel (25) der Bimetallfeder (24) über das Einlegeblech (7) hinausstehen;
b) im Ruhezustand beaufschlagt die Bimetallschaltfeder (9) der Funktionseinheit den ersten Festkontakt (5) über einen mit diesem verbundenen Seitenkontakt (10);
c) der Durchmesser der aus Einlegeblech (7), Bimetallschaltfeder (9) und Bimetallfeder (24) gebildeten Funktionseinheit ist geringer als der Innendurchmesser des hülsenartigen Führungsteils (1);
d) die Funktionseinheit ist axial von der Öffnungsseite her in das Führungsteil (1) einführbar;
e) im Endmontagezustand ist die Funktionseinheit insbesondere **durch** eineSchnapp-/Rastverbindung (11) mit dem Isolierträger (4) mit Abstand derart verbunden, daß für die Bimetallschaltfeder (9) im Erregungszustand ein Öffnungs-Schwenkbereich verbleibt.

2. Elektrische Steckverbindung nach Anspruch 1,
**dadurch gekennzeichnet, daß**
der Isolierträger (4) randseitig mit über den Bodenbereich (3) axial hinausstehenden Lagebegrenzungsvorsprüngen (12) versehen ist.

3. Elektrische Steckverbindung nach Anspruch 2,
**dadurch gekennzeichnet, daß**
das Einlegeblech (7) mit L-förmigen Randaufbiegungen (13) versehen ist, wobei L-Schenkel (14) der Randaufbiegungen im Endmontagezustand auf den Lagebegrenzungsvorsprüngen (12) aufliegen.

4. Elektrische Steckverbindung nach einem der vorhergehenden Ansprüche,
**dadurch gekennzeichnet, daß**
das Einlegeblech (7) mit federnden Rastnasen (16) versehen ist, die in Rastöffnungen des Isolierträgers (4) einrasten.

5. Elektrische Steckverbindung nach den Ansprüchen 3 und 4,
**dadurch gekennzeichnet, daß**
die Rastnasen (16) in Ausnehmungen (15) der L-förmigen Randaufbiegungen (13) angeordnet sind.

6. Elektrische Steckverbindung nach Anspruch 5,
**dadurch gekennzeichnet, daß**
die Ausnehmungen (15) der L-förmigen Randaufbiegungen (13) sowohl den Flächenbereich des Einlegebleches (7) als auch beide L-Schenkel (14) durchgreifen.

7. Elektrische Steckverbindung nach einem der vorhergehenden Ansprüche,
**dadurch gekennzeichnet, daß**
im Zentrum des Isolierträgers (4) ein Befestigungsniet angeordnet ist, das durch den Boden des Isolierträgers (4) hindurchgeht, in einen Flachstecker (18) übergeht und mit seinem Nietkopf ein Trägerelement (19) des Seitenkontaktes (10) übergreift.

8. Elektrische Steckverbindung nach Anspruch 7,
**dadurch gekennzeichnet, daß**
das Trägerelement (19) für den Seitenkontakt (10) mit einer Abbiegung (20) versehen ist und der Seitenkontakt (10) in einer Vertiefung (21) des Isolierträgers (4) einliegt.

9. Elektrische Steckverbindung nach einem der vorhergehenden Ansprüche,
**dadurch gekennzeichnet, daß**
der Zentralbereich des Einlegebleches (7) mit einer tellerartigen Aufwölbung (22) versehen ist.

10. Elektrische Steckverbindung nach Anspruch 2,
**dadurch gekennzeichnet, daß**
die U-Schenkel (25) der Bimetallfeder (24) sich zwischen den Lagebegrenzungsvorsprüngen (12) des Isolierträgers (4) erstrecken.

11. Elektrische Steckverbindung nach einem der vorhergehenden Ansprüche,
**dadurch gekennzeichnet, daß**
die U-Schenkel (25) der Bimetallfeder (24) bei Erwärmung Seitenausnehmungen (26) des hülsenartigen Führungsteils (1) durchgreifen.

12. Verfahren zur Herstellung einer elektrischen Steckverbindung, insbesondere einer Steckdose oder einer Zigarrenanzündeeinrichtung für Kraftfahrzeuge und dergleichen, mit einem zumindest abschnittsweise elektrisch leitfähigen, hülsenartigen Führungsteil (1) zur axial verschiebbaren Aufnahme eines Zigarrenanzünders oder Anschlußsteckers eines elektrischen Verbrauchers;
**gekennzeichnet durch folgende Verfahrensschritte:**
- Vorsehen eines Isolierträgers (4) und Montage eines Kontaktträgers mit einem Seitenkontakt (10) **durch** ein Zentralniet auf dem Bodenbereich des Isolierträgers (4);
- Montage des Isolierträgers (4) im Bodenbereich des hülsenartigen Führungsteils;
- Vorsehen eines Einlegebleches (7), dessen Außendurchmesser geringer ist als der Innendurchmesser des hülsenartigen Führungsteils (1);
- elektrisch leitende, außerzentrische Befestigung einer Bimetallschaltfeder (9) auf der Unterseite des Einlegebleches (7) sowie Befestigung einer etwa U-förmigen Bimetallfeder (24) mit dem U-Mittelbereich (23) auf dem Einlegeblech (7) derart, daß die U-Schenkel (25) der Bimetallfeder (24) über das Einlegeblech (7) hinausstehen;
- thermische Vorprüfung und erforderlichenfalls Justierung der einen thermischen Überlastschutz bildenden Funktionseinheit bestehend aus Einlegeblech (7), Bimetallschaltfeder (9) und Bimetallfeder (24);
- Einführung der Funktionseinheit in Einsteckrichtung in das hülsenartige Führungsteil (1) in Einsteckrichtung;
- Herstellen einer Schnapp-/Rastverbindung (11) zwischen dem Einlegeblech (7) und dem Isolierträger (4) derart, daß die unerregte Bimetallschaltfeder (9) mit einem Kontaktelement den Seitenkontakt (10) beaufschlagt.

## Claims

1. Electrical plug-in connection, more especially a socket or cigar lighting means in automotive vehicles or the like, including a sleeve-like guide member (1) for the axially displaceable accommodation of a cigar lighter or an attachment plug of an electric consumer unit, a first fixed contact (5) being disposed in the base region of the guide member (1) on an insulating carrier (4), and the guide member (1), which is at least electrically conductive in some sections, forming a second fixed contact which acts upon additional counter-contacts, as well as a thermal and electrical overload safety device (6) being provided which has an insert plate (7), which extends parallel to and at a spacing from the insulating carrier (4) in the base region (3), and beneath which is disposed a bimetallic element,
**characterised by** the following features:
a) a bimetallic switching spring (9) is secured on the underside (8) of the insert plate (7) in an electrically conductive and eccentric manner as the bimetallic element, and the U-shaped central region (23) of a substantially U-shaped bimetallic spring (24) is secured on the central region of the insert plate in such a manner that the insert plate (7), the bimetallic switching spring (9), secured thereon, and the bimetallic spring (24) form a functional unit, which is cohesively mountable and can be prechecked in respect of its switching behaviour, U-shaped portions (25) of the bimetallic spring (24) extending beyond the insert plate (7);
b) in the inoperative state, the bimetallic switching spring (9) of the functional unit acts upon the first fixed contact (5) via a lateral contact (10), which is connected to said first fixed contact;
c) the diameter of the functional unit, which is formed from the insert plate (7), bimetallic switching spring (9) and bimetallic spring (24), is smaller than the internal diameter of the sleeve-like guide member (1);
d) the functional unit is axially insertable into the guide member (1) from the opening side; and
e) in the final assembly position, the functional unit is connected to the insulating carrier (4), more especially by a snap-locking connection (11), at a spacing therefrom in such a manner that a pivotal range of opening remains for the bimetallic switching spring (9) in the state of excitation.

2. Electrical plug-in connection according to claim 1, **characterised in that** the insulating carrier (4) is provided on its edge with position-limiting projections (12) which protrude axially beyond the base region (3).

3. Electrical plug-in connection according to claim 2, **characterised in that** the insert plate (7) is provided with L-shaped bent-up edges (13), L-shaped portions (14) of the bent-up edges resting on the position-limiting projections (12) in the final assembly position.

4. Electrical plug-in connection according to one of the preceding claims, **characterised in that** the insert plate (7) is provided with resilient detents (16), which lock in position in locking openings of the insulating carrier (4).

5. Electrical plug-in connection according to claims 3 and 4, **characterised in that** the detents (16) are disposed in recesses (15) of the L-shaped bent-up edges (13).

6. Electrical plug-in connection according to claim 5, **characterised in that** the recesses (15) of the L-shaped bent-up edges (13) extend through both the surface region of the insert plate (7) and the two L-shaped portions (14).

7. Electrical plug-in connection according to one of the preceding claims, **characterised in that**, in the centre of the insulating carrier (4), there is disposed a securing rivet which passes through the base of the insulating carrier (4), extends into a flat plug (18) and engages, with its rivet head, over a carrier element (19) of the lateral contact (10).

8. Electrical plug-in connection according to claim 7, **characterised in that** the carrier element (19) for the lateral contact (10) is provided with a bent portion (20), and the lateral contact (10) lies in an indentation (21) in the insulating carrier (4).

9. Electrical plug-in connection according to one of the preceding claims, **characterised in that** the central region of the insert plate (7) is provided with a disc-like arched portion (22).

10. Electrical plug-in connection according to claim 2, **characterised in that** the U-shaped portions (25) of the bimetallic spring (24) extend between the position-limiting projections (12) of the insulating carrier (4).

11. Electrical plug-in connection according to one of the preceding claims, **characterised in that** the U-shaped portions (25) of the bimetallic spring (24) extend through lateral recesses (26) of the sleeve-like guide member (1) in the event of heating.

12. Method of producing an electrical plug-in connection, more especially a socket or a cigar lighting means for automotive vehicles and the like, including a sleeve-like guide member (1), which is at least electrically conductive in some sections, for the axially displaceable accommodation of a cigar lighter or an attachment plug of an electric consumer unit,
**characterised by** the following method steps:
- provision of an insulating carrier (4) and assembly of a contact carrier with a lateral contact (10) through a central rivet on the base region of the insulating carrier (4);
- assembly of the insulating carrier (4) in the base region of the sleeve-like guide member;
- provision of an insert plate (7), the external diameter of which is smaller than the internal diameter of the sleeve-like guide member (1);
- electrically conductive, eccentric securement of a bimetallic switching spring (9) on the underside of the insert plate (7), as well as securement of a substantially U-shaped bimetallic spring (24) with the U-shaped central region (23) on the insert plate (7) in such a manner that the U-shaped portions (25) of the bimetallic spring (24) protrude beyond the insert plate (7);
- thermal prechecking and, if necessary, adjustment of the functional unit, which forms a thermal overload safety device and comprises insert plate (7), bimetallic switching spring (9) and bimetallic spring (24);
- introduction of the functional unit, in the plug-in direction, into the sleeve-like guide member (1) *in the plug-in direction*; and
- establishment of a snap-locking connection (11) between the insert plate (7) and the insulating carrier (4) in such a manner that the unexcited bimetallic switching spring (9) acts upon the lateral contact (10) with a contact element.

## Revendications

1. Connexion enfichable électrique, en particulier prise femelle ou dispositif allume-cigare pour véhicules automobiles ou analogues, comprenant une pièce de guidage en forme de douille (1) pour la réception à coulissement axial d'un allume-cigare ou d'une fiche de raccordement d'un consommateur électrique, dans laquelle un premier contact fixe (5) est disposé sur un support isolant (4) dans la zone de fond de la pièce de guidage (1) et la pièce de guidage (1) au moins partiellement électroconductrice forme un deuxième contact fixe qui agit sur d'autres contre-contacts, et il est prévu une protection (6) contre la surcharge thermique et électrique qui présente une tôle d'insertion (7) s'étendant parallèlement et à distance du support isolant (4) dans la zone de fond (3), sous laquelle est disposé un élément bimétallique,
**caractérisée par les caractéristiques suivantes :**
a) sur la face inférieure (8) de la tôle d'insertion (7) est fixé, en tant qu'élément bimétallique de manière électroconductrice et en position décentrée, un ressort de commande bimétallique (9) et sur la partie centrale de la tôle d'insertion est fixée la partie centrale en U (23) d'un ressort bimétallique (24) approximativement en forme de U de telle manière que la tôle d'insertion (7), le ressort de commande bimétallique (9) fixé dessus ainsi que le ressort bimétallique (24) forment une unité fonctionnelle pouvant être montée d'un seul bloc et préalablement contrôlée en ce qui concerne son comportement de commutation, des branches de U (25) du ressort bimétallique (24) dépassant la tôle d'insertion (7) ;
b) au repos, le ressort de commande bimétallique (9) de l'unité fonctionnelle agit sur le premier contact fixe (5) par l'intermédiaire d'un contact latéral (10) relié à celui-ci ;
c) le diamètre de l'unité fonctionnelle formée de la tôle d'insertion (7), du ressort de commande bimétallique (9) et du ressort bimétallique (24) est inférieur au diamètre intérieur de la pièce de guidage en forme de douille (1) ;
d) l'unité fonctionnelle peut être introduite dans la pièce de guidage (1) axialement depuis le côté d'ouverture ;
e) dans l'état de montage final, l'unité fonctionnelle est reliée avec écartement au support isolant (4), en particulier par liaison par encliquetage/enclenchement, de telle manière qu'il subsiste une zone de pivotement d'ouverture pour le ressort de commande bimétallique (9) à l'état excité.

2. Connexion enfichable électrique selon la revendication 1,
**caractérisée en ce que**
le support isolant (4) est pourvu en périphérie de saillies de limitation de position (12) dépassant axialement la zone de fond (3).

3. Connexion enfichable électrique selon la revendication 2,
**caractérisée en ce que**
la tôle d'insertion (7) est pourvue de coudages vers le haut périphériques (13) en forme de L, des branches de L (14) des coudages vers le haut reposant sur les saillies de limitation de position (12) dans l'état de montage final.

4. Connexion enfichable électrique selon l'une des revendications précédentes,
**caractérisée en ce que**
la tôle d'insertion (7) est pourvue d'ergots d'enclenchement élastiques (16) qui s'enclenchent dans des ouvertures d'enclenchement du support isolant (4).

5. Connexion enfichable électrique selon les revendications 3 et 4,
**caractérisée en ce que**
les ergots d'enclenchement (16) sont disposés dans des évidements (15) des coudages vers le haut (13) en forme de L.

6. Connexion enfichable électrique selon la revendication 5,
**caractérisée en ce que**
les évidements (15) des coudages vers le haut (13) en forme de L traversent aussi bien la zone de surface de la tôle d'insertion (7) que les deux branches de L (14).

7. Connexion enfichable électrique selon l'une des revendications précédentes,
**caractérisée en ce que**
au centre du support isolant (4) est disposé un rivet de fixation qui traverse le fond du support isolant (4), se transforme en une fiche plate (18) et dépasse avec sa tête de rivet un élément de support (19) du contact latéral (10).

8. Connexion enfichable électrique selon la revendication 7,
**caractérisée en ce que**
l'élément de support (19) pour le contact latéral (10) est pourvu d'un coudage vers le bas (20) et le contact latéral (10) est logé dans un renfoncement (21) du support isolant (4).

9. Connexion enfichable électrique selon l'une des revendications précédentes,
**caractérisée en ce que**
la partie centrale de la tôle d'insertion (7) est pourvue d'un bombement en forme de disque (22).

10. Connexion enfichable électrique selon la revendication 2,
**caractérisée en ce que**
les branches de U (25) du ressort bimétallique (24) s'étendent entre les saillies de limitation de position (12) du support isolant (4).

11. Connexion enfichable électrique selon l'une des revendications précédentes,
**caractérisée en ce que**
les branches de U (25) du ressort bimétallique (24) traversent en cas d'échauffement des évidements latéraux (26) de la pièce de guidage en forme de douille (1).

12. Procédé de fabrication d'une connexion enfichable électrique, en particulier d'une prise femelle ou d'un dispositif allume-cigare pour véhicules automobiles ou analogues, comprenant une pièce de guidage en forme de douille (1) au moins partiellement électroconductrice pour la réception à coulissement axial d'un allume-cigare ou d'une fiche de raccordement d'un consommateur électrique,
**caractérisé par les étapes de procédé suivantes :**
- prévoir un support isolant (4) et monter un support de contact avec un contact latéral (10) par un rivet central sur la zone de fond du support isolant (4) ;
- monter le support isolant (4) dans la zone de fond de la pièce de guidage en forme de douille (1) ;
- prévoir une tôle d'insertion (7) dont le diamètre est inférieur au diamètre intérieur de la pièce de guidage en forme de douille (1) ;
- fixer de manière électroconductrice en position décentrée un ressort de commande bimétallique (9) sur la face inférieure de la tôle d'insertion (7) et fixer un ressort bimétallique en forme de U (24) par la partie centrale en U (23) sur la tôle d'insertion (7) de telle manière que les branches de U (25) du ressort bimétallique (24) dépassent la tôle d'insertion (7) ;
- effectuer un contrôle thermique préalable et, si nécessaire, régler l'unité fonctionnelle formant une protection contre la surcharge thermique, composée de la tôle d'insertion (7), du ressort de commande bimétallique (9) et du ressort bimétallique (24) ;
- introduire l'unité fonctionnelle en direction d'enfichage dans la pièce de guidage en forme de douille (1) ;
- établir une liaison par encliquetage/enclenchement (11) entre la tôle d'insertion (7) et le support isolant (4) de telle manière que le ressort de commande bimétallique (9) non excité agisse sur le contact latéral (10) par un élément de contact.
